(19) Europäisches Patentamt
European Patent Office
Office européen des brevets

(11) Veröffentlichungsnummer: **0 292 654 B1**

# EUROPÄISCHE PATENTSCHRIFT

(45) Veröffentlichungstag der Patentschrift: **06.11.91**

(51) Int. Cl.⁵: **B60J 7/12**

(21) Anmeldenummer: **88103569.5**

(22) Anmeldetag: **08.03.88**

(54) **Spannvorrichtung für den Verdeckbezug eines Kraftfahrzeuges.**

(30) Priorität: **29.05.87 DE 3718093**

(43) Veröffentlichungstag der Anmeldung:
**30.11.88 Patentblatt 88/48**

(45) Bekanntmachung des Hinweises auf die
Patenterteilung:
**06.11.91 Patentblatt 91/45**

(84) Benannte Vertragsstaaten:
**DE ES FR GB IT**

(56) Entgegenhaltungen:
**GB-A- 261 883**
**GB-A- 944 518**

(73) Patentinhaber: **Dr.Ing.h.c. F. Porsche Aktiengesellschaft
Porschestrasse 42
W-7000 Stuttgart 40(DE)**

(72) Erfinder: **Kolb, Eugen
Ernst-Bloch-Weg 11
W-7000 Stuttgart 30(DE)**

**Beschreibung**

Die Erfindung bezieht sich auf eine Spannvorrichtung für den Verdeckbezug eines Klappverdecks eines Kraftfahrzeuges, mit einem durch die schlaufenförmig ausgebildeten Längsränder des Verdeckbezuges hindurchgeführten Zugorgan, das mit einem vorderen, querverlaufenden Rahmenteil und einer schwenkbaren Stütze des Klappverdecks verbunden ist und an seinem einen Ende mit einer Zugfeder zusammenwirkt, wobei sich in einer Schließstellung des Klappverdecks das Zugorgan über die Zugfeder spannt.

Bei einer bekannten Spannvorrichtung der eingangs genannten Gattung (GB-A 261 883) ist innerhalb eines schlaufenförmig ausgebildeten Längsrandes des Verdeckbezuges ein Zugorgan vorgesehen, dessen eines Ende mit einem vorderen querverlaufenden Rahmenteil und dessen anderes Ende unter Zwischenschaltung einer Zugfeder mit einer schwenkbaren Stütze des Klappverdecks verbunden ist. Bei dieser Spannvorrichtung ist die Länge des Zugorganes so bemessen, daß die Zugfeder in einer Schließstellung des Klappverdecks stets gespannt wird. Nachteilig an dieser Anordnung ist, daß keine Einstellvorrichtung vorgesehen ist, um herstellungs- und witterungsbedingte Längenänderungen des Verdeckbezuges zu kompensieren. Ferner kann es vorkommen, daß bei einer relativ großen Federspannung der Zugfeder die schwenkbare Stütze nach vorne gezogen wird, wodurch die Spannung des Verdeckstoffes in der Schlußstellung verringert wird.

Bei einer weiteren bekannten Spannvorrichtung (DE-C 481 111) ist das Zugorgan direkt mit den querverlaufenden Rahmenteil und der umklappbaren Stütze verbunden, so daß nur relativ geringe herstellungs- und witterungsbedingte Längenänderungen des Verdeckbezuges ausgeglichen werden können.

Aufgabe der Erfindung ist es, eine Spannvorrichtung für den Verdeckbezug eines Kraftfahrzeuges so auszubilden, daß relativ große witterungs- und/oder herstellungsbedingte Längenänderungen des Verdeckbezuges auf einfache Weise ausgeglichen werden können.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch das Zusammenwirken des Zugorganes mit einer Zugfeder und einem mit einem Druckbolzen versehenen, federbelasteten Schwenkhebel ein selbsttätiges Spannen des Verdeckbezuges beim Schließvorgang des Klappverdecks erfolgt und daß mit dieser Spannvorrichtung relativ große witterungs- und/oder herstellungsbedingte Längenänderungen des Verdeckbezuges kompensierbar sind. Die Spannvorrichtung ist im Aufbau einfach und kostengünstig herstellbar. Durch das Zusammenwirken des Druckbolzens mit dem freien Ende des Längsholmes wird beim Schließvorgang der Schwenkhebel nach hinten bewegt und somit das Zugorgan gespannt, welches wiederum die Zugfeder und den Verdeckbezug spannt. Die Spannvorrichtung ist so gestaltet, daß der Verdeckstoff in der Schließstellung seine maximale Spannung aufweist, wogegen beim Öffnen des Klappverdecks der Verdeckbezug entlastet wird. Ein Ausführungsbeispiel der Erfindung ist in der Zeichnung dargestellt und wird im folgenden näher erläutert.

Es zeigt:

Fig. 1     eine Teilseitenansicht auf ein Klappverdeck mit einer Spannvorrichtung für den Verdeckbezug,

Fig. 2     eine Teildraufsicht auf das Klappverdeck und die Spannvorrichtung in größerem Maßstab,

Fig. 3     einen Schnitt nach der Linie III-III in größerem Maßstab,

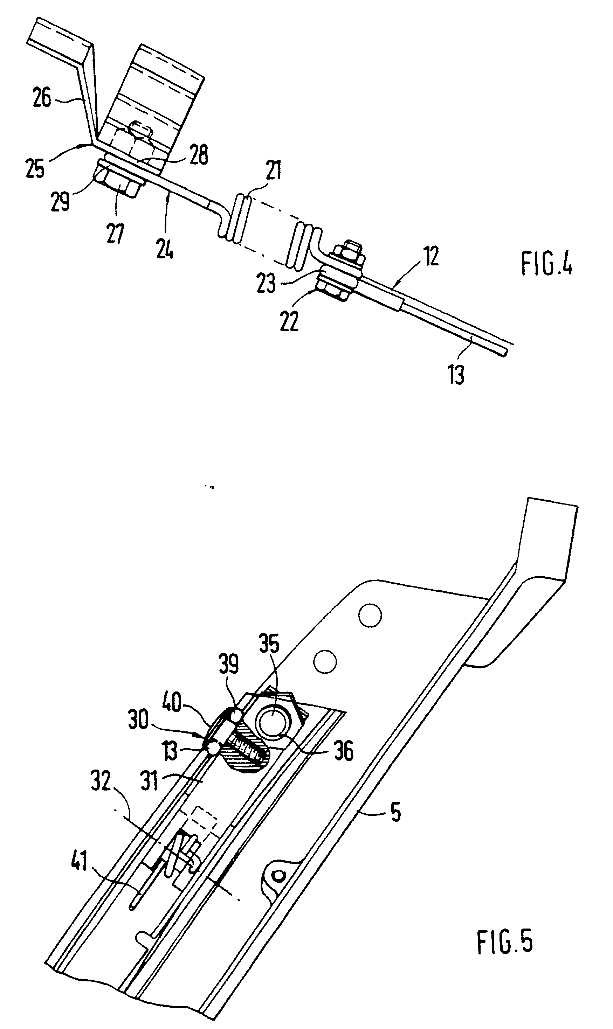

Fig. 4     eine Ansicht in Pfeilrichtung R der Fig. 2 in größerem Maßstab,

Fig. 5     eine Ansicht in Pfeilrichtung S der Fig. 1 in größerem Maßstab,

Fig. 6     eine Einzelheit X der Fig. 1 in vergrößertem Maßstab,

Fig. 7     einen Schnitt nach der Linie VII-VII der Fig. 1 in größerem Maßstab.

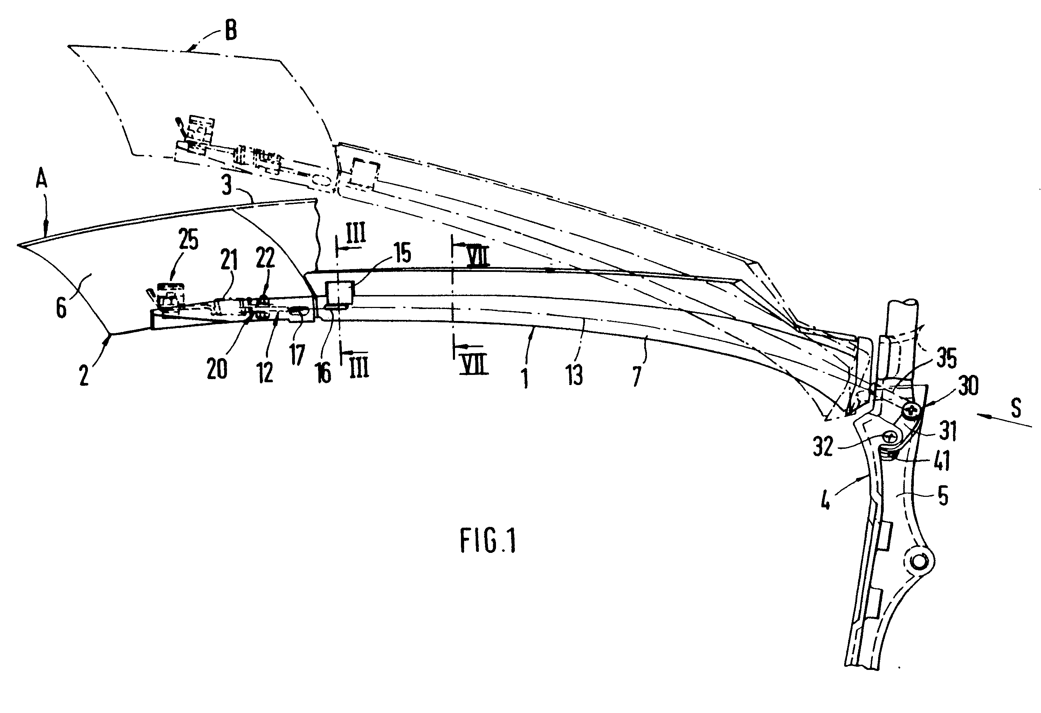

Ein Klappverdeck 1 für ein Kraftfahrzeug umfaßt im dargestellten Bereich einen Dachrahmen 2, einen Verdeckbezug 3 und eine umklappbare Stütze 4, die durch einen am Wagenkastenunterteil schwenkbar gelagerten Hauptspriegel 5 gebildet wird (Fig. 1).

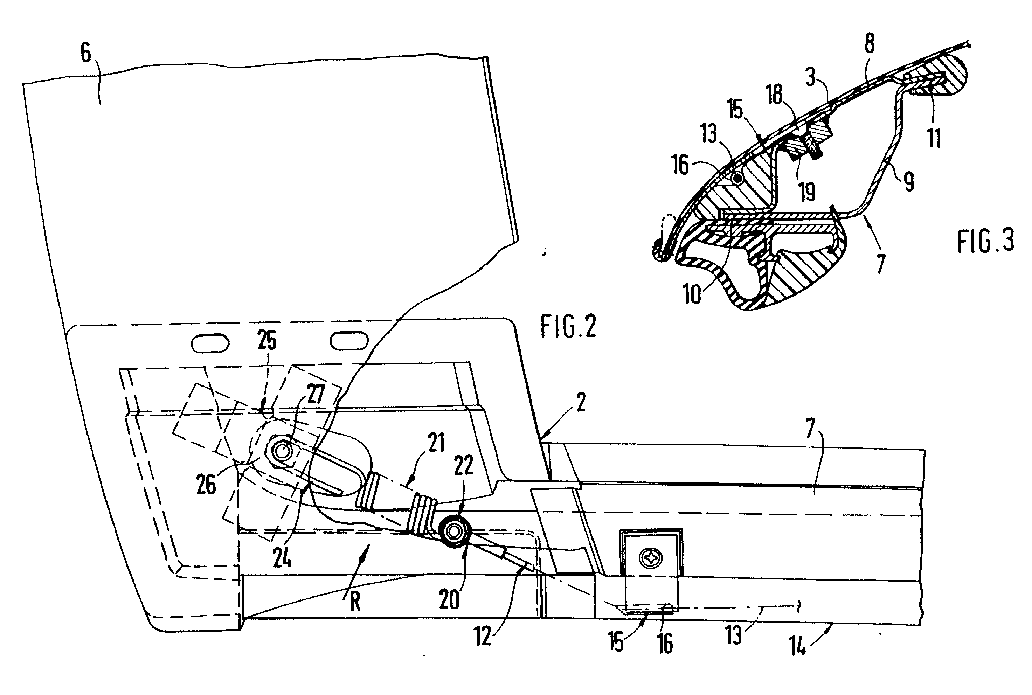

Der Dachrahmen 2 setzt sich aus einem benachbart einem Windschutzscheibenrahmen angeordneten, querverlaufenden Rahmenteil 6 und zwei seitlichen Längsholmen 7 zusammen (Fig. 2). Die ungeteilten Längsholme 7 sind über ein nicht näher dargestelltes Gelenkhebelsystem an den dahinterliegenden Hauptspriegel 5 angeschlossen. Jeder Längsholm 7 besteht aus zwei profilierten Blechpreßteilen 8, 9, die an gleichgerichteten Flanschen 10, 11 durch Schweißen fest miteinander verbunden sind und einen kastenförmigen Hohlträger bilden (Fig. 3). Ferner ist an beiden Längsseiten des Klappverdecks 1 je eine Spannvorrichtung 12 für den Verdeckbezug 3 vorgesehen, durch die herstellungs- und/oder witterungsbedingte Längenänderungen des Verdeckbezuges 3 ausgeglichen werden können.

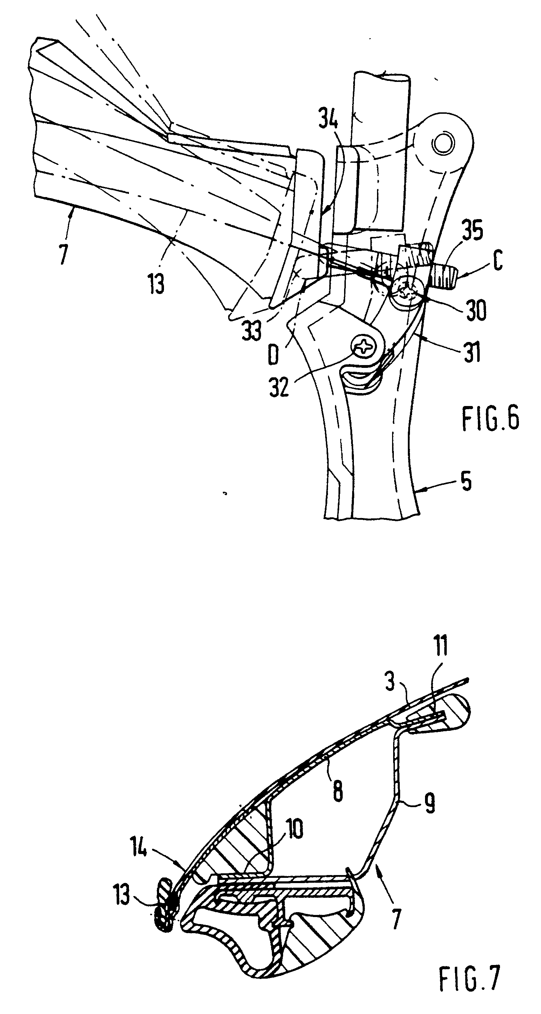

Jede Spannvorrichtung 12 umfaßt ein Zugorgan 13, das gemäß Fig. 2 durch ein nicht streckbares Spannseil gebildet wird. Das Zugorgan 13 ist über einen wesentlichen Teil der Längserstreckung des Klappverdecks 1 innerhalb eines schlaufenförmig ausgebildeten Längsrandes 14 des Verdeckbezuges 3 angeordnet. Der schlaufenförmige Längsrand 14 setzt sich aus zwei Lagen Verdeckstoff zusammen, die örtlich über Steppnähte miteinander verbunden sind (Fig. 7).

Benachbart dem querverlaufenden Rahmenteil 6 ist am Längsholm 7 ein Umlenkelement 15 mit einem Rohr 16 angeordnet, wobei das Zugorgan 13 abschnittsweise innerhalb des Rohres 16 geführt ist. Nach dem Rohr 16 ist am schlaufenförmigen Längsrand 14 des Verdeckbezuges 3 eine Öffnung 17 vorgesehen, durch die das Zugorgan 13 hindurchgeführt ist. Das plattenförmige Umlenkelement 15 ist auf das Blechpreßteil 8 aufgesetzt und mittels einer Befestigungsschraube 18 in Lage gehalten, die in eine fest mit dem Blechpreßteil 8 verbundene Schweißmutter 19 eingedreht ist (Fig. 3). Das Rohr 16 verläuft etwa parallel zu einer Mittellängsebene.

Nach dem Umlenkelement 15 verläuft das Zugorgan 13 schräg nach innen und wirkt mit seinem freien Ende 20 mit einer Zugfeder 21 zusammen. Die Zugfeder 21 ist einerseits über eine Schraubverbindung 22 (Befestigungsschraube und Mutter) mit einer endseitigen Öse 23 des Zugorganes 13 verbunden und andererseits mit einem U-förmig gebogenen Endabschnitt 24 an einem Widerlager 25 verankert. Das fest mit dem querverlaufenden Rahmenteil 6 verbundene Widerlager 25 umfaßt eine Halteplatte 26, an der eine vertikal ausgerichtete Schraube 27 zum Einhängen der Zugfeder 21 vorgesehen ist. Das eingehängte Ende der Zugfeder 21 ist zwischen einem Flansch 28 der Halteplatte 26 und einer am Schraubenkopf anliegenden Unterlagscheibe 29 fest eingespannt.

Das dem Hauptspriegel 5 zugekehrte Ende 30 des Zugorganes 13 ragt ebenfalls abschnittsweise aus einer nicht gezeigten Öffnung des schlaufenförmigen Längsrandes 14 des Verdeckbezuges 3 hervor und ist mit einem Schwenkhebel 31 fest verbunden. Der in einem seitlich außenliegenden Bereich am Hauptspriegel 5 angeordnete Schwenkhebel 31 ist mittels einer Achse 32 drehbar am Hauptspriegel 5 angelenkt. Die Achse 32 des Schwenkhebels 31 befindet sich unterhalb des Längsholmes 7. Der Schwenkhebel 31 weist in der Seitenansicht gesehen, einen gebogenen oder einen winkelförmigen Verlauf auf. Am oberen Ende des Schwenkhebels 31 ist ein Druckbolzen 35 angeordnet, der etwa rechtwinkelig zum Schwenkhebel 31 ausgerichtet ist. Der Druckbolzen 35 stützt sich mit einem kalottenförmigen Bereich 33 an einem hinteren Ende 34 des angrenzenden Längsholmes 7 ab. Die Befestigung des hinteren Endes 30 des Zugorganes 13 ist unterhalb des Druckbolzens 35 vorgesehen.

Der Druckbolzen 35 ist in eine Gewindebohrung 36 des Schwenkhebels 31 eingedreht und in Längsrichtung gesehen, einstellbar ausgebildet. Gemäß Fig. 6 überragt der Druckbolzen 35 den Schwenkhebel 31 sowohl nach vorne als auch nach hinten hin, wobei auf den hinteren Bereich eine Mutter aufgesetzt sein kann, die sich am Schwenkhebel 31 abstützt. Das hintere Ende 30 des Zugorganes 13 ist als Öse 39 ausgebildet, die mittels einer Schraube 40 an einer seitlichen Außenfläche des Schwenkhebels 31 befestigt ist. Das mit dem Schwenkhebel 31 zusammenwirkende Federelement 41 drückt den Schwenkhebel entgegen dem Uhrzeigersinn in Richtung Längsholm 7.

Die Spannvorrichtung 12 hat folgende Funktion: Beim Absenken des Klappverdecks 1 von einer gestrichelt dargestellten Zwischenlage B in eine Schließstellung A wirkt der Druckbolzen 35 mit einem hinteren Ende 34 des Längsholmes 7 zusammen und der Schwenkhebel 31 wird entgegen dem Federelement 41 nach hinten in eine Stellung C bewegt, wodurch das Zugorgan 13, die Zugfeder 21 und der Verdeckbezug 3 gespannt werden. Der Verdeckbezug 3 weist in der Schließstellung A des Klappverdecks 1 seine größte Spannung auf, so daß die im Fahrbetrieb auftretenden Geräusche wesentlich reduziert werden.

Beim Hochschwenken des Klappverdecks 1 weicht der Druckbolzen 35 nach vorne in eine Stellung D aus. Hierdurch werden das Zugorgan 13, die Zugfeder 21 und der Verdeckbezug 3 entlastet, so daß das Öffnen des Klappverdecks 1 erleichtert wird.

## Patentansprüche

1. Spannvorrichtung (12) für den Verdeckbezug (3) eines Klappverdecks (1) eines Kraftfahrzeuges mit einem durch die schlaufenförmig ausgebildeten Längsränder (14) des Verdeckbezuges (3) verlaufenden Zugorgan (13), das mit einem vorderen quer verlaufenden Rahmenteil (6) und mit einer schwenkbaren Stütze (4) des Klappverdecks (1) verbunden ist und an seinem einen Ende (20) mit einer Zugfeder (21) zusammenwirkt, wobei sich in einer Schließstellung (A) des Klappverdecks (1) das Zugorgan (13) über die Zugfeder (21) spannt, dadurch gekennzeichnet, daß die Zugfeder (21) an dem dem vorderen querverlaufenden Rahmenteil (6) zugekehrten Ende (20) des Klappverdecks (1) mit dem Zugorgan (13) verbunden ist und daß das Zugorgan (13) an seinem anderen Ende (30) mit einem federbelasteten Schwenkhebel (31) zusammenwirkt, wobei sich in der Schließstellung (A) des Klappverdecks (1) ein am Schwenkhebel (31) angeordneter - in Längsrichtung gesehen - einstellbar ausgebildeter Druckbolzen (35) an einem freien Ende (34) eines seitlichen Längsholmes (7) des Klappverdecks (1) abstützt.

2. Spannvorrichtung nach Anspruch 1, dadurch gekennzeichnet, daß ein Ende der Zugfeder (21) an einem am vorderen Rahmenteil (6) befestigten Widerlager (25) eingehängt ist.

3. Spannvorrichtung nach den Ansprüchen 1 und 2, dadurch gekennzeichnet, daß das andere Ende der Zugfeder (21) über eine Schraubverbindung (22) mit einer endseitigen Öse (23) des Zugorganes (13) verbunden ist.

4. Spannvorrichtung nach Anspruch 1, dadurch gekennzeichnet, daß das Zugorgan (13) örtlich mit einem am Längsholm (7) angeordneten Umlenkelement (15) zusammenwirkt.

5. Spannvorrichtung nach Anspruch 4, dadurch gekennzeichnet, daß das Zugorgan (13) abschnittsweise in einem Rohr (16) des Umlenkelementes (15) geführt ist.

6. Spannvorrichtung nach Anspruch 1, dadurch gekennzeichnet, daß der Schwenkhebel (31) mit seinem freien, untenliegenden Ende drehbar an der umklappbaren Stütze (4) gelagert ist.

7. Spannvorrichtung nach den Ansprüchen 1 und 6, dadurch gekennzeichnet, daß die Stütze (4) durch den Hauptspriegel (5) des Klappverdecks (1) dargestellt ist.

8. Spannvorrichtung nach Anspruch 1, dadurch gekennzeichnet, daß der Druckbolzen (35) im oberen Bereich des Schwenkhebels (31) angeordnet und etwa rechtwinkelig zu diesem ausgerichtet ist.

9. Spannvorrichtung nach Anspruch 1, dadurch gekennzeichnet, daß das dem Schwenkhebel (31) zugekehrte Ende (30) des Zugorganes (13) unterhalb des Druckbolzens (35) an den Schwenkhebel (31) angeschlossen ist.

10. Spannvorrichtung nach Anspruch 1, dadurch gekennzeichnet, daß der Schwenkhebel (31) durch ein Federelement (41) entgegen dem Uhrzeigersinn zum Längsholm (7) hin bewegt wird.

11. Spannvorrichtung nach den Ansprüchen 2, 4 und 5, dadurch gekennzeichnet, daß das Zugorgan (13) nach dem Umlenkelement (15) schräg nach innen zum Widerlager (25) verläuft.

## Claims

1. A tensioning device (12) for the covering (3) of a folding roof (1) of a motor vehicle, having a drawing member (13) extending through the longitudinal edges (14) - formed as runners - of the roof covering (3) and connected to a forward transversely extending frame part (6) and a pivotable support (4) of the folding roof (1) and cooperating at one end (20) with a tension spring (21), the drawing member (13) being tensioned by way of the tension spring (21) in a closed position (A) of the folding roof (1), characterized in that at the end (20) of the folding roof (1) facing the forward transversely extending frame part (6) the tension spring (21) is connected to the drawing member (13), and the drawing member (13) cooperates at its other end (30) with a spring-loaded rocking lever (31), a thrust bolt (35) mounted on the rocking lever (31) and constructed so as to be adjustable - when viewed in the longitudinal direction - being supported on a free end (34) of a lateral longitudinal beam (7) of the folding roof (1) in the closed position (A) of the folding roof (1).

2. A tensioning device according to Claim 1, characterized in that one end of the tension spring (21) is suspended on an abutment (25) secured to the forward frame part (6).

3. A tensioning device according to Claims 1 and 2, characterized in that the other end of the tension spring (21) is connected by way of a screw connexion (22) to an eye (23) at the end of the drawing member (13).

4. A tensioning device according to Claim 1, characterized in that the drawing member (13) cooperates locally with a deflexion member (15) arranged on the longitudinal beam (7).

5. A tensioning device according to Claim 4, characterized in that the drawing member (13) is guided in part in a tube (16) of the deflexion member (15).

6. A tensioning device according to Claim 1, characterized in that the rocking lever (31) is mounted rotatably on the foldable support (4) at its free lower end.

7. A tensioning device according to Claims 1 and 6, characterized in that the support (4) is formed by the main bow (5) of the folding roof (1).

8. A tensioning device according to Claim 1, characterized in that the thrust bolt (35) is arranged in the upper area of the rocking lever (31) and is orientated substantially at right angles thereto.

9. A tensioning device according to Claim 1, characterized in that the end (30) of the drawing member (13) facing the rocking lever (31) is connected to the rocking lever (31) below the thrust bolt (35).

10. A tensioning device according to Claim 1, characterized in that the rocking lever (31) is moved anti-clockwise towards the longitudinal beam (7) by a spring member (41).

11. A tensioning device according to Claims 2, 4 and 5, characterized in that beyond the deflexion member (15) the drawing member (13) runs obliquely inwards towards the abutment (25).

**Revendications**

1. Dispositif de tension (12) pour la capote (3) d'un toit décapotable (1) d'un véhicule automobile comportant un organe de traction (13) traversant les bords longitudinaux (14), en forme de boucle, de la capote (3), qui est relié à une partie de châssis avant (6) s'étendant transversalement et à un appui (4) pivotant du toit décapotable et coopère à l'une de ses extrémités (20) avec un ressort de traction (21), l'organe de traction (13) étant tendu par le ressort de traction (21) dans une position de fermeture (A) du toit décapotable (1), caractérisé en ce que le ressort de traction (21) est relié à l'extrémité (20) du toit décapotable (1) tournée vers la partie de châssis avant (6) transversale, avec l'organe de traction (13) et en ce que l'organe de traction (13) coopère à son autre extrémité (30) avec un levier de pivotement (31) soumis à l'action d'un ressort, un boulon de pression (35) réglable - en direction longitudinale -, placé sur le levier de pivotement (31), prenant appui contre une extrémité libre (34) d'un longeron (7) du toit décapotable (1), en position de fermeture (A) du toit décapotable (1).

2. Dispositif de tension selon la revendication 1, caractérisé en ce qu'une extrémité du ressort de traction (21) est accrochée à une butée (25) fixée sur la partie de châssis avant (6).

3. Dispositif de tension selon les revendications 1 et 2, caractérisé en ce que l'autre extrémité du ressort de traction (21) est reliée à un oeillet (23) terminal de l'organe de traction (13), par un assemblage vissé (22).

4. Dispositif de tension selon la revendication 1, caractérisé en ce que l'organe de traction (13) coopère localement avec un élément de renvoi (15) placé sur le longeron (7).

5. Dispositif de tension selon la revendication 4, caractérisé en ce que l'organe de traction (13) est guidé en partie dans un tube (16) de l'élément de renvoi (15).

6. Dispositif de tension selon la revendication 1, caractérisé en ce que le levier de pivotement (31) est monté par son extrémité libre, située en bas, de manière à tourner sur l'appui (4) rabattable.

7. Dispositif de tension selon les revendications 1 et 6, caractérisé en ce que l'appui (4) est constitué par l'arceau principal (5) du toit décapotable (1).

8. Dispositif de tension selon la revendication 1, caractérisé en ce que le boulon d'appui (35) est placé dans la région supérieure du levier de pivotement (31) et est orienté à peu près perpendiculairement à celui-ci.

9. Dispositif de tension selon la revendication 1, caractérisé en ce que l'extrémité (30) de l'organe de traction (13), tournée vers le levier de pivotement (31), est raccordée au levier de pivotement (31), au-dessous du boulon de pression (35).

10. Dispositif de tension selon la revendication 1, caractérisé en ce que le levier de pivotement (31) est déplacé par un élément à ressort (41), dans le sens contraire aux aiguilles d'une montre, vers le longeron (7).

11. Dispositif de tension selon les revendications 2, 4 et 5, caractérisé en ce que l'organe de traction (13) s'étend, après l'élément de renvoi (15), obliquement vers l'intérieur, en direction de la butée (25).

FIG.1

EP 0 292 654 B1

6

FIG.3

FIG.2

2

7

25

27

21

22

24

26

R

20

12

15

16

13

14

15

16

13

8

3

18

11

15

13

9

16

19

7

10

EP 0 292 654 B1

FIG.4

FIG.5

FIG.6

FIG.7